# EUROPEAN PATENT APPLICATION

(11) **EP 3 107 132 A1**
(43) Date of publication of application: **21.12.2016**
(21) Application number: 15275153.3
(22) Date of filing: 17.06.2015
(51) Int. Cl.: H01M 2/02

(54) **ELECTRIC BATTERY ASSEMBLY**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

There is disclosed an electric battery assembly comprising: a plurality of electric batteries arranged in an array, an interconnection for connecting batteries in the array to provide a common power output; a plurality of shock absorbent housings, wherein each electric battery is provided within a shock-absorbent housing.

The shock absorbent housing may have the form of a blister, which may be flexible and which may be filled with a shock-mitigating material.

## Description

The present invention relates to an electric battery assembly.

Typically an electric battery is provided as a monolithic device and/or provided in a rigid housing. Accordingly typical batteries represent a single point of failure.

According to the present invention there is provided an electric battery assembly comprising: a plurality of electric batteries arranged in an array, an interconnection for connecting batteries in the array to provide a common power output; a plurality of shock absorbent housings, wherein each electric battery is provided within a shock-absorbent housing.

Each shock absorbent housing may have the form of a blister, which may be flexible and which may be filled with a shock-mitigating material. Such shock-mitigating material may comprise air and/or may comprise a shear-thickening fluid and/or may comprise a hard resin.

Typically the shock absorbent housings are affixed to a flexible substrate, which may be formed from a reinforced composite.

The array of batteries may be arranged in a substantially planar form and the interconnection may comprise: a first conductive member suspended over the array of batteries; a second conductive member suspended under the array of batteries, wherein for each battery there is provided a first connection extending between a positive electrode of the battery and the first conductive member and for each battery there is provided a second connection extending between a negative electrode of the battery and the second conductive member.

Where such interconnections are provided, the first conductive member may be in the form of a sheet and the second conductive member may be in the form of a sheet.

There may be a single battery provided in each shock-absorbent housing.

Where shock absorbent housings are affixed to the flexible substrate, the shock absorbent housings may taper as they extend from the flexible substrate and be separated from one another to permit flexion. In such circumstances, the shock absorbent housings may have a substantially hemi-spherical form.

Each of the plurality of batteries may have a substantially planar form, such as a disc.

At least one of the first or second conductive members may be a mesh, and further still, may be a mesh comprising fuse wire.

As such, there can be provided a flexible, or in other words deformable, power source which may be applied to surfaces to match the contours of that surface.

As such there can be provided a power source where localised damage need not render the entire supply inoperable.

So that the invention may be better understood, an embodiment shall now be described with reference to the following figures, of which:

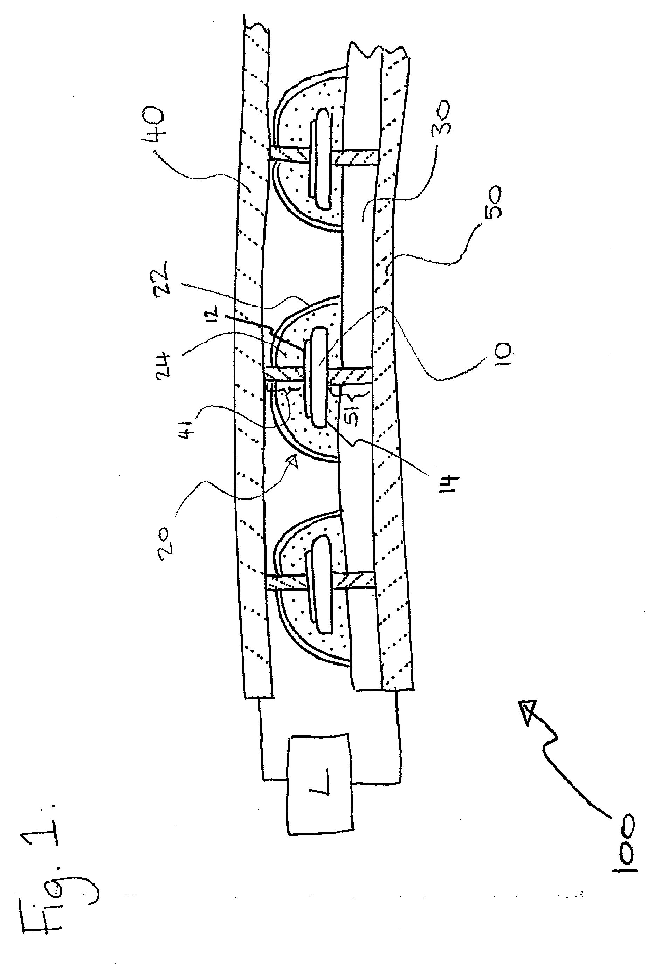

Figure 1 shows schematically an electric battery assembly according to the present invention and connected to an electrical load;
Figure 2 shows a perspective computer generated image view of an electric battery assembly according to the present invention;
Figure 3 shows a cut-away view of the assembly shown in Figure 2.

An electric battery assembly 100 has a substantially planar form and comprises a plurality of electrical batteries 10. The plurality of electrical batteries 10 are arranged as an array within the plane defined by the assembly 100.

Each battery cell 10 may be of the 'button' or 'coin' variety (i.e. having the form of a disc, and e.g. as shown each being substantially coplanar or at least parallel with each other and the general plane of the assembly 100) and rated 3V-9V. (Other embodiments of the invention may comprise batteries with ratings higher than 9V.) Each battery comprises a negative electrode 14 and a positive electrode 12. In the present embodiment, the orientation of each battery is identical with respect to the plane defined by the assembly 100. That is to say, all of the positive electrodes 12 are at one side or surface of the array (the upper side as shown in the figures), and all of the negative electrodes 14 are on the other side or surface of the array (the lower side as shown in the figures).

The assembly 100 also comprises a plurality of shock absorbing housings 20 affixed to a substrate 30. The substrate 30 has the form of a flexible sheet of dielectric material.

The flexible substrate 30 may comprise a reinforced composite such as glass fibre reinforced polymer or Kevlar™.

Each of the shock absorbing housings 20 comprise a chamber formed by a blister or pouch 22 which houses a battery 10 and also a shock mitigating material 24.

The shock absorbing material 24 is air, in this embodiment. Other electrically insulating gases could be used in other embodiments. Indeed, in other embodiments, the shock absorbing material 24 could be a shear-thickening fluid or a hard resin. Combinations of such materials could be used as the shock absorbing material 24.

Each shock absorbing housing 20 is separated from the other housings 20. Further, each blister 22 generally defines the boundary of the housing 20 and has a tapering form, in this embodiment a hemisphere. As such, the array of housings 20 tend not to abut one another if the flexible substrate 30 deforms, unless a significant curvature is applied; thus the array of shock absorbing housings 20 does not tend to interrupt flexion.

The positive electrodes 12 of the batteries 10 are connected to a common positive electrode 40 which has the form of a sheet of conductive mesh. Other conductive sheets of material may be suitable for use as a conductive member for the common positive electrode 40, provided that the flexibility is appropriate.

A first connection 41 extends upwards (with respect to the figure) from the positive electrode of each battery 10 through the shock mitigating material 24, through the blister 22 and onto the common electrode 40. Thus the connection 41 electrically connects the positive electrode 12 of each battery 10 to the common positive electrode 40.

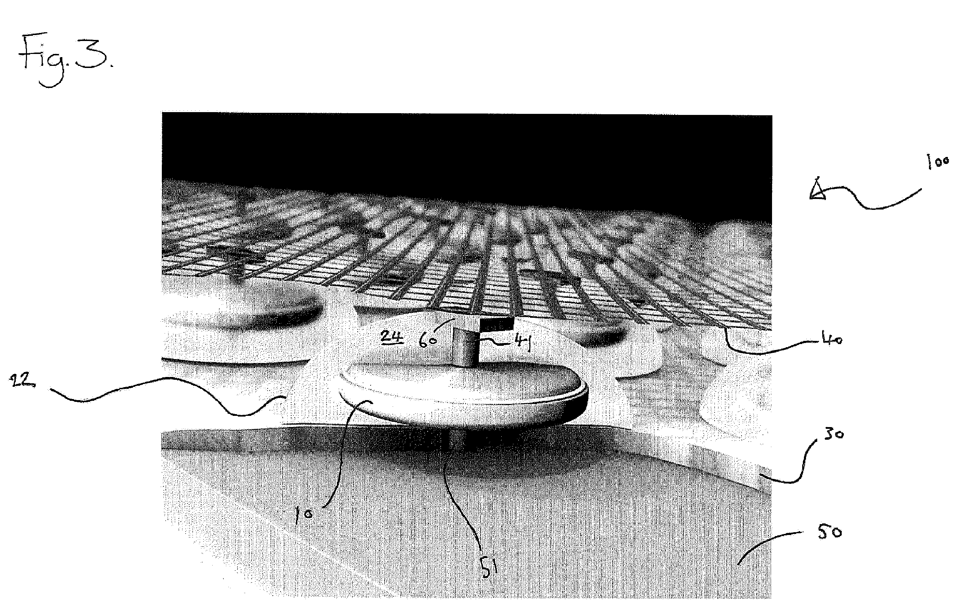

Optionally, and as shown in Figure 3, a further electrical unit 60 may be electrically interposed between the common positive electrode 40 and the first connection 41. Such a further unit could comprise surge protection circuitry, or a fuse. Alternatively or additionally, such unit 60 could comprise components for monitoring and reporting the electrical characteristics (such as remaining charge) of the associated battery cell. In other embodiments, such components could be integrated into the blister otherwise. Accordingly, the provisions for managing and operating a partially damages are increased.

The negative electrodes 14 of the batteries 10 are connected to a common negative electrode 50 which has the form of a sheet of conductive mesh. Other conductive sheets of material may be suitable for use as a conductive member for the common positive electrode 50, provided that the flexibility is appropriate.

A second connection 51 extends downwards (with respect to the figure) from the negative electrode 14 of each battery 10 through the shock mitigating material 24, through the flexible substrate 30 and onto the common electrode 50. Thus the connection 51 electrically connects the negative electrode 14 of each battery 10 to the common negative electrode 50.

It will be appreciated by the skilled man that the assembly 100 effectively connects the plurality of batteries 10 in parallel. Thus the battery assembly 100 may be used to drive an electrical load L with direct current by connecting the load L between the common positive electrode 40 and the common negative electrode 50.

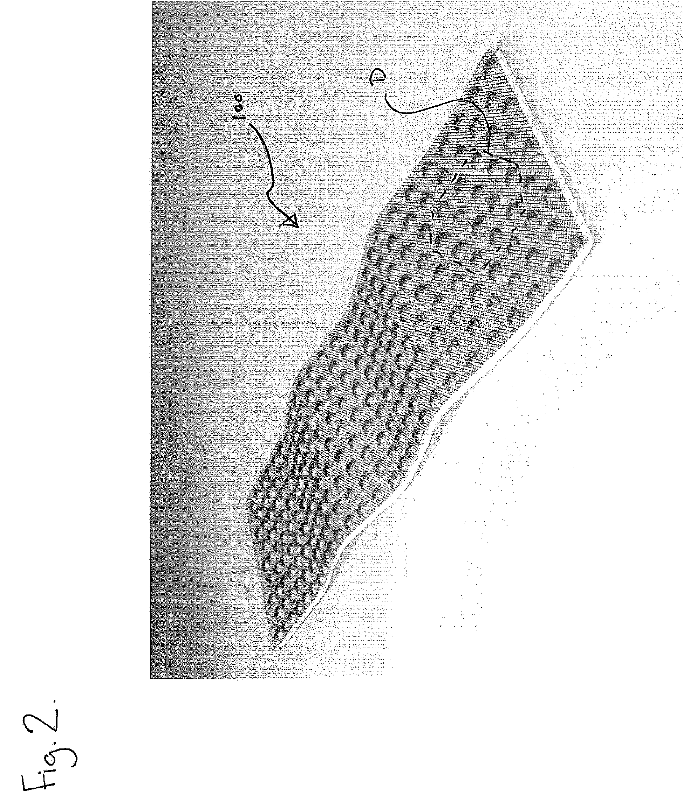

In operation, the assembly may operate as a portable power supply and be provided as a continuous sheet of material, as shown in figure 2, for integration with portable electrical devices.

The flexibility of the assembly 100 enables it to be applied conformally to surfaces, making it suitable for retrofitting and making it suitable for use on irregular surfaces. Thus the assembly 100 can be suitable for use with a wide range of devices.

The provision of a number of batteries 10 connected in parallel offers some redundancy in the assembly. The redundancy of the assembly 100 enables it to operate despite areas of damage, e.g. if area D of Figure 2 were to be rendered inoperable, the assembly 100 would still function to supply power from the remaining undamaged portions.

In variants of the above embodiments, one or both of the common positive electrode or the common negative electrode may be formed from a surge-defensive member, such that the effects of any undesirably high currents are localised. One surge-defensive member contemplated has the form of a wire mesh where the wires are the fuse wire type and have predetermined properties such that they tend to melt above a certain current.

## Claims

1. An electric battery assembly comprising:
A plurality of electric batteries arranged in an array,
An interconnection for connecting batteries in the array to provide a common power output,
A plurality of shock absorbent housings,
wherein each electric battery is provided within a shock-absorbent housing.

2. An assembly according to claim 1 wherein the shock absorbent housing has the form of a flexible blister.

3. An assembly according to claim 2 wherein the flexible blister is filled with a shock-mitigating material.

4. An assembly according to claim 3 wherein the shock-mitigating material comprises air.

5. An assembly according to claim 3 wherein the shock-mitigating material comprises a shear-thickening fluid.

6. An assembly according to any one of the preceding claims wherein the shock absorbent housings are affixed to a flexible substrate.

7. An assembly according to claim 6 wherein the flexible substrate is formed from reinforced composite.

8. An assembly according to any one of the preceding claims wherein the array of batteries is arranged in a substantially planar form and the interconnection comprises
a. A first conductive member suspended over the array of batteries
b. A second conductive member suspended under the array of batteries
Wherein for each battery there is provided a first connection extending between a positive electrode of the battery and the first conductive member and
For each battery there is provided a second connection extending between a negative electrode of the battery and the second conductive member.

9. An assembly according to claim 8 wherein the first conductive member is in the form of a sheet and wherein the second conductive member is in the form of a sheet.

10. An assembly according to any one of the preceding claims wherein there is a single battery provided in each shock-absorbent housing.

11. An assembly according to any one of claims 6 to 10 wherein the shock absorbent housings taper as they extend from the flexible substrate and are separated to permit flexion.

12. An assembly according to any one of the preceding claims wherein the shock absorbent housings have a substantially hemi-spherical form.

13. An assembly according to any one of the preceding claims wherein each of the plurality of batteries has a substantially planar form.

14. An assembly according to any one of claims 9 to 13 wherein at least one of the first or second conductive members is a mesh.

15. An assembly according to claim 14 wherein the mesh comprises fuse wire.
